# EUROPEAN PATENT APPLICATION

(11) **EP 4 199 203 A1**
(43) Date of publication of application: **21.06.2023**
(21) Application number: 21956272.5
(22) Date of filing: 28.09.2021
(51) Int. Cl.: H01M 50/143

(54) **PRESSURE RELIEF APPARATUS, BATTERY CELL, BATTERY AND ELECTRICAL DEVICE**

(71) Applicant: Contemporary Amperex Technology Co., Limited, Ningde, Fujian 352100 (CN)
(72) Inventor: GU, Mingguang, Ningde Fujian 352000 (CN); CHEN, Xiaobo, Ningde Fujian 352000 (CN); WANG, Xuehui, Ningde Fujian 352000 (CN); HAO, Yucang, Ningde Fujian 352000 (CN); GAO, Xiongwei, Ningde Fujian 352000 (CN)
(74) Representative: Rowlands, Stuart Michael
(86) International application number: PCT/CN2021/121474
(87) International publication number: WO 2023/050098

(57) **Abstract**

A pressure relief apparatus, a battery cell, a battery, and an electrical device are provided in embodiments of the present application, which belong to the field of battery technologies. The pressure relief apparatus includes a pressure relief body and a scored groove. The pressure relief body includes a pressure relief portion, the pressure relief portion is configured to be opened to relieve a pressure inside the battery cell when an internal pressure or temperature of the battery cell reaches a threshold, the pressure relief portion is provided with a first opening side on one side in a first direction, the pressure relief portion is provided with a second opening side and a third opening side respectively on both sides in a second direction, and the first direction is perpendicular to the second direction. The scored groove is arranged on the pressure relief body, the scored groove defines the pressure relief portion, the scored groove includes a first arc-shaped groove and a second arc-shaped groove, the first arc-shaped groove extends from the first opening side to the second opening side, and the second arc-shaped groove extends from the first opening side to the third opening side. The arc-shaped design of the first arc-shaped groove and the second arc-shaped groove makes it less likely that the pressure relief portion cannot be opened in a large area, thereby improving the safety of the battery cell.

## Description

### Technical Field

The present application relates to the field of battery technologies, and in particular, to a pressure relief apparatus, a battery cell, a battery, and an electrical device.

### Background Art

Batteries are widely used in electronic devices, such as mobile phones, laptop computers, battery vehicles, electric vehicles, electric planes, electric ships, electric toy cars, electric toy ships, electric toy planes, and electric tools.

In the development of battery technologies, in addition to improving the performance of battery cells, safety is also an issue that needs to be considered.

Therefore, how to improve the safety of the battery cells is an urgent problem to be solved in the battery technologies.

### Summary of the Invention

A pressure relief apparatus, a battery cell, a battery, and an electrical device are provided in embodiments of the present application, which can effectively improve the safety of battery cells.

In a first aspect, a pressure relief apparatus for a battery cell is provided in an embodiment of the present application, and includes: a pressure relief body including a pressure relief portion, wherein the pressure relief portion is configured to be opened to relieve a pressure inside the battery cell when an internal pressure or temperature of the battery cell reaches a threshold, the pressure relief portion is provided with a first opening side on one side in a first direction, the pressure relief portion is provided with a second opening side and a third opening side respectively on both sides in a second direction, and the first direction is perpendicular to the second direction; and a scored groove arranged on the pressure relief body, wherein the scored groove defines the pressure relief portion, the scored groove includes a first arc-shaped groove and a second arc-shaped groove, the first arc-shaped groove extends from the first opening side to the second opening side, and the second arc-shaped groove extends from the first opening side to the third opening side.

In the above technical scheme, the scored groove on the pressure relief body defines the pressure relief portion, and when the internal pressure or temperature of the battery cell reaches the threshold, the pressure relief portion will be opened with the scored groove as a boundary. The first arc-shaped groove of the scored groove extends from the first opening side to the second opening side, and the second arc-shaped groove extends from the first opening side to the third opening side; therefore, because of the arc-shaped design of the first arc-shaped groove and the second arc-shaped groove, in a process of opening the pressure relief portion, the pressure relief portion can be smoothly ruptured from the first opening side to the second opening side and the third opening side along first arc-shaped groove and the second arc-shaped groove, respectively. The pressure relief portion has a large pressure relief area, making it less likely that the pressure relief portion cannot be opened in a large area, thereby improving the safety of the battery cell.

In addition, the arc-shaped design of the first arc-shaped groove and the second arc-shaped groove shortens a path that the pressure relief portion is ruptured along the scored groove, and then the pressure relief portion is quickly opened to realize rapid pressure relief, which improves pressure relief efficiency, reduces the risk of fire and explosion of a battery cell due to thermal runaway, and improves the safety of the battery cell.

In some embodiments, the scored groove further includes a first groove, the first groove extends in the second direction, and the first arc-shaped groove is connected to the second arc-shaped groove through the first groove.

In the above technical solution, the scored groove further includes the first groove extending in the second direction and being connected between the first arc-shaped groove and the second arc-shaped groove, and the arrangement of the first groove increases a distance between the first arc-shaped groove and the second arc-shaped groove, increases the size of the pressure relief portion in the second direction, increases the opening area of the pressure relief portion, and increases the pressure relief area of the pressure relief apparatus, thereby increasing the pressure relief efficiency of the pressure relief apparatus.

In some embodiments, both the first arc-shaped groove and the second arc-shaped groove are tangential to the first groove.

In the above technical solution, both the first arc-shaped groove and the second arc-shaped groove are tangential to the first groove, which eliminates a sharp corner at a connection position of the first arc-shaped groove and the first groove and a sharp corner at a connection position of the second arc-shaped groove and the first groove, thereby avoiding stress concentration, and improving the stability of the pressure relief apparatus before pressure relief.

In some embodiments, an end of the first arc-shaped groove away from the second opening side is connected to an end of the second arc-shaped groove away from the third opening side.

In the above technical solution, one end of the first arc-shaped groove is directly connected to one end of the second arc-shaped groove, which simplifies the structure of the scored groove and reduces production costs.

In some embodiments, the scored groove further comprises a second groove and a third groove; the second groove extends from one end of the first arc-shaped groove away from the second arc-shaped groove to a direction away from the first opening side, and the third groove extends from one end of the second arc-shaped groove away from the first arc-shaped groove to a direction away from the first opening side.

In the above technical solution, the arrangement of the second groove and the third groove increases the size of the pressure relief portion in the first direction, increases the opening area of the pressure relief portion, and increases the pressure relief area of the pressure relief apparatus, thereby improving the pressure relief efficiency of the pressure relief apparatus.

In some embodiments, the second groove is tangential to the first arc-shaped groove, and the third groove is tangential to the second arc-shaped groove.

In the above technical solution, the second groove is tangential to the first arc-shaped groove to eliminate a sharp corner at a connection position of the second groove and the first arc-shaped groove, and the third groove is tangential to the second arc-shaped groove to eliminate a sharp corner at a connection position of the third groove and the second arc-shaped groove, thereby avoiding stress concentration, and improving the stability of the pressure relief apparatus before pressure relief.

In some embodiments, both the second groove and the third groove extend in the first direction.

In the above technical solution, both the second groove and the third groove extend in the first direction, so that the second groove and the third groove are arranged in parallel, and therefore, the pressure relief portion can be opened more regularly during pressure relief, which is conducive to pressure relief of the pressure relief apparatus.

In some embodiments, in the second direction, the first arc-shaped groove and the second arc-shaped groove are symmetrically distributed on the pressure relief body.

In the above technical solution, the first arc-shaped groove and the second arc-shaped groove are symmetrically distributed on the pressure relief body, which is conducive to rupturing of the pressure relief portion from the first opening side to the second opening side and the third opening side simultaneously along the first arc-shaped groove and the second arc-shaped groove, thereby improving the opening efficiency of the pressure relief portion.

In some embodiments, the pressure relief body includes: an accommodating space for accommodating an electrode assembly of the battery cell, and a wall defining the accommodating space, wherein the scored groove is arranged on an inner surface or outer surface of the wall.

In the above technical solution, the pressure relief body includes the accommodating space defined by the wall, and the accommodating space can accommodate the electrode assembly, so that the pressure relief apparatus has both a pressure relief function and an accommodating function for accommodating the electrode assembly.

In some embodiments, the wall includes a peripheral wall, and the peripheral wall is a hollow structure with both ends open in an extension direction thereof; and the scored groove is arranged on an inner surface or an outer surface of the peripheral wall.

In the above technical solution, the scored groove is arranged on the peripheral wall, and the peripheral wall can provide a larger arrangement space for the scored groove, which is conducive to forming a large-sized pressure relief portion on the peripheral wall, and ensures the pressure relief area of the pressure relief portion.

In some embodiments, the peripheral wall is a cylinder, and an included angle between the extension direction of the peripheral wall and the second direction is less than 45 degrees.

In the above technical solution, the peripheral wall is a cylinder, and the part of the scored groove that forms a larger included angle with the extension direction of the peripheral wall is less likely to rupture. The included angle between the extension direction of the peripheral wall and the second direction is less than 45 degrees, so that the difficulty of rupturing of the first arc-shaped groove from the first opening side to the second opening side is gradually increased, and the difficulty of rupturing of the second arc-shaped groove from the second opening side to the third opening side is gradually increased, ensuring that the pressure relief portion is opened first from the first opening side.

In some embodiments, the extension direction of the peripheral wall is consistent with the second direction.

In the above technical solution, the extension direction of the peripheral wall is consistent with the second direction, further ensuring that the pressure relief portion is opened first from the first opening side.

In some embodiments, the wall is provided with a scored group, and the scored group includes two scored grooves arranged at an interval in the first direction, the first opening side of the pressure relief portion defined by one of the scored grooves in the scored group and the first opening side of the pressure relief portion defined by the other scored groove are arranged back to back.

In the above technical solution, the first opening side of the pressure relief portion defined by one of the scored grooves in the scored group and the first opening side of the pressure relief portion defined by the other scored groove are arranged back to back, so that the two pressure relief portions defined by the two scored grooves are arranged back to back. In the pressure relief process, the two pressure relief portions will be opened back to back to increase the pressure relief area.

In some embodiments, the wall includes a peripheral wall, the peripheral wall is a hollow structure with both ends open in the extension direction thereof, and a plurality of the scored groups are arranged on the peripheral wall at intervals in a circumferential direction thereof.

In the above technical solution, the peripheral wall is provided with a plurality of scored groups arranged at intervals in a peripheral direction thereof, and a position corresponding to each scored group can be used for pressure relief, so that the pressure relief apparatus can achieve pressure relief in multiple directions, thereby improving the pressure relief efficiency. Even if the scored group in one of the orientations is blocked by another component, the pressure relief portion defined by the scored group in another orientation of the pressure relief apparatus can be opened for pressure relief.

In a second aspect, a battery cell is provided in an embodiment of the present application, including the pressure relief apparatus according to any embodiment of the first aspect.

In a third aspect, a battery is provided in an embodiment of the present application, including the battery cell according to any embodiment of the second aspect; and a box body configured to accommodate the battery cell.

In a fourth aspect, an electrical device is provided in an embodiment of the present application, including the battery according to any embodiment of the third aspect.

In a fifth aspect, a manufacturing method for a pressure relief apparatus is provided in an embodiment of the present application, and the method includes: providing a pressure relief body; and processing a scored groove on the pressure relief body; wherein the scored groove defines a pressure relief portion, the pressure relief portion is configured to be opened to relieve a pressure inside the battery cell when an internal pressure or temperature of the battery cell reaches a threshold, the pressure relief portion is provided with a first opening side on one side in a first direction, and is provided with a second opening side and a third opening side respectively on both sides in a second direction, the first direction is perpendicular to the second direction, the scored groove includes a first arc-shaped groove and a second arc-shaped groove, the first arc-shaped groove extends from the first opening side to the second opening side, and the second arc-shaped groove extends from the first opening side to the third opening side.

In a sixth aspect, a manufacturing apparatus for a pressure relief apparatus is further provided in an embodiment of the present application, and the manufacturing apparatus includes: a providing means configured to provide a pressure relief body; and a processing means configured to process a scored groove on the pressure relief body; wherein the scored groove defines a pressure relief portion, the pressure relief portion is configured to be opened to relieve a pressure inside the battery cell when an internal pressure or temperature of the battery cell reaches a threshold, the pressure relief portion is provided with a first opening side on one side in a first direction, and is provided with a second opening side and a third opening side respectively on both sides in a second direction, the first direction is perpendicular to the second direction, the scored groove includes a first arc-shaped groove and a second arc-shaped groove, the first arc-shaped groove extends from the first opening side to the second opening side, and the second arc-shaped groove extends from the first opening side to the third opening side.

### Description of Drawings

In order to illustrate the technical solutions of the embodiments of the present application more clearly, the accompanying drawings that need to be used in the embodiments will be briefly introduced below. It should be understood that the following drawings only show some embodiments of the present application, and thus should not be regarded as a limitation to the scope. For those of ordinary skill in the art, other related drawings can also be obtained according to these drawings without any creative effort.
Fig. 1 is a schematic structural diagram of a vehicle according to some embodiments of the present application;
Fig. 2 is a schematic structural diagram a battery according to some embodiments of the present application;
Fig. 3 is an exploded diagram of a battery cell according to some embodiments of the present application;
Fig. 4 is a partial diagram of a pressure relief apparatus according to some embodiments of the present application;
Fig. 5 is a partial diagram of a pressure relief apparatus according to some other embodiments of the present application;
Fig. 6 is a partial diagram of a pressure relief apparatus according to some further embodiments of the present application;
Fig. 7 is a schematic structural diagram of a pressure relief apparatus according to some embodiments of the present application;
Fig. 8 is a flow chart of a manufacturing method for a pressure relief apparatus according to an example of the present application; and
Fig. 9 is a schematic block diagram of a manufacturing apparatus for a pressure relief apparatus according to an example of the present application.

Reference numerals: 10-box body; 11-first part; 12-second part; 20-battery cell; 21-case; 22-electrode assembly; 23-end cap; 24-pressure relief apparatus; 241-pressure relief body; 2411-pressure relief portion; 2411a-first opening side; 2411b-second opening side; 2411c-third opening side; 2412-accommodating space; 2413-peripheral wall; 242-scored groove; 2421-first arc-shaped groove; 2422-second arc-shaped groove; 2423-first groove; 2424-second groove; 2425-third groove; 243-scored group; 25-electrode terminal; 26-current collecting member; 100-battery; 200-controller; 300-motor; 1000-vehicle; 2000-manufacturing apparatus; 2100-providing means; 2200-processing means; X-first direction; and Y-second direction.

### Detailed Description

In order to make the objects, technical solutions and advantages of embodiments of the present application clearer, the technical solutions in the embodiments of the present application will be clearly described below with reference to the drawings for the embodiments of the present application. It will be apparent that the described embodiments are some of, rather than all of, the embodiments of the present application. Based on the examples in the present application, all other examples obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific examples, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

Reference to "an example" in the present application means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples.

In the description of the present application, it should be noted that, unless otherwise expressly specified and limited, the terms "mount," "connected," "connecting," and "attached" should be broadly understood, for example, they may be a fixed connection or a detachable connection or be an integrated connection; or may be a direct connection or an indirect connection through an intermediate medium. For those of ordinary skill in the art, the specific meanings of the above terms in the present application can be understood according to specific situations.

In the embodiments of the present application, the same reference numerals denote the same components, and for the sake of brevity, detailed descriptions of the same components are omitted in different embodiments. It should be understood that the thickness, length, width and other dimensions of various components in the embodiments of the present application shown in the drawings, as well as the overall thickness, length and width, etc. of the integrated device are only exemplary descriptions, and should not constitute any limitation to the present application.

The "plurality" in the present application refers to two or more (including two).

In the present application, battery cells may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cells may be cylindrical, flat, rectangular, or in other shapes, which is not limited in the embodiments of the present application. The battery cells are generally divided into three types according to encapsulating manners: cylindrical battery cells, rectangular battery cells, and pouch cells, which are not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery typically includes a box body for encapsulating one or more battery cells. The box body can prevent liquids or other foreign matters from affecting charging or discharging of the battery cells.

The battery cells include electrode assemblies and electrolyte solutions, and each electrode assembly is composed of a positive electrode sheet, a negative electrode sheet and a separator. The battery cells work mainly relying on the movement of metal ions between the positive electrode sheet and the negative electrode sheet. The positive electrode sheet includes a positive current collector and a positive electrode active material layer, a surface of the positive current collector is coated with the positive electrode active material layer, the positive current collector not coated with the positive electrode active material layer protrudes from the positive electrode collector already coated with the positive electrode active material layer, and the positive current collector not coated with the positive electrode active material layer is used as a positive electrode tab. Taking a lithium-ion battery as an example, the material of the positive current collector may be aluminum, and the positive active material may be lithium cobalt oxide, lithium iron phosphate, ternary lithium, lithium manganate, or the like. The negative electrode sheet includes a negative current collector and a negative electrode active material layer, a surface of the negative current collector is coated with the negative electrode active material layer, the negative current collector not coated with the negative electrode active material layer protrudes from the negative electrode collector already coated with the negative electrode active material layer, and the negative current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. A separator may be made from polypropylene (PP), polyethylene (PE), or the like. In addition, the electrode assembly may be of a wound structure or a laminated structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be taken into account.

In a battery cell, in order to ensure the safety of the battery cell, a pressure relief apparatus is generally provided in the battery cell, and a pressure inside the battery cell is relieved through the pressure relief apparatus to ensure the safety of the battery cell.

The inventor found that even if a pressure relief apparatus is arranged in a battery cell, a risk of fire and explosion of the battery cell may still occur. The inventor has further researched and found that the current pressure relief apparatus is generally provided with a scored groove on a pressure relief body. During pressure relief, a pressure relief portion of the pressure relief body is ruptured from a position of the scored groove to discharge a discharge in the battery cell, thereby achieving the purpose of pressure relief. The scored groove is composed of a plurality of groove sections located in different orientations, and two groove sections transition at a right angle; therefore, it is very likely that after ruptured in one orientation of the groove section, the pressure relief portion will not continue to rupture along the groove sections in other orientations, the pressure relief portion cannot be opened in a large area, and the pressure relief efficiency is low. As a result, the internal discharge of the battery cell cannot be discharged in time when the thermal runaway of the battery cell occurs, thereby causing fire and explosion, and having safety problems.

In view of this, a pressure relief apparatus is provided in an embodiment of the present application. A scored groove is arranged on a pressure relief body, the scored groove defines a pressure relief portion, the pressure relief portion is provided with a first opening side on one side in a first direction, the pressure relief portion is provided with a second opening side and a third opening side respectively on both sides in a second direction, and the first direction is perpendicular to the second direction. The scored groove includes a first arc-shaped groove and a second arc-shaped groove, the first arc-shaped groove extends from the first opening side to the second opening side, and the second arc-shaped groove extends from the first opening side to the third opening side.

In such a pressure relief apparatus, because of the arc-shaped design of the first arc-shaped groove and the second arc-shaped groove in the scored groove, in a process of opening the pressure relief portion, the pressure relief portion can be smoothly ruptured from the first opening side to the second opening side and the third opening side along first arc-shaped groove and the second arc-shaped groove, respectively. The pressure relief portion has a large pressure relief area, making it less likely that the pressure relief portion cannot be opened in a large area, thereby improving the safety of the battery cell.

The technical solutions described in the embodiments of the present application are applicable to a battery cell, a battery, and an electrical device using a battery.

The electrical device may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid vehicle, a range extended electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present application do not impose special limitations on the above electrical device.

In the following embodiments, for convenience of description, the electrical device being a vehicle is taken as an example for description.

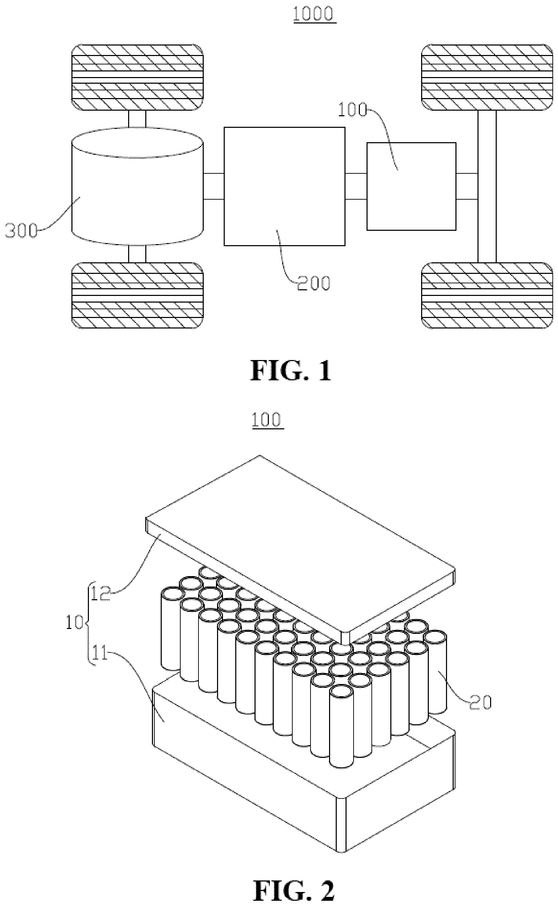

Referring to FIG. 1, which is a schematic structural diagram of vehicle 1000 according to some embodiments of the present application. The interior of vehicle 1000 is provided with battery 100, and battery 100 may be arranged at the bottom or head or tail of vehicle 1000. Battery 100 may be configured to power vehicle 1000, for example, battery 100 may serve as an operating power source for vehicle 1000.

Vehicle 1000 may further include controller 200 and motor 300, wherein controller 200 is configured to control battery 100 to power motor 300, for example, for the operating power demand when vehicle 1000 is starting, navigating, and driving.

In some embodiments of the present application, battery 100 not only may serve as an operating power source of vehicle 1000, but also may serve as a driving power source of vehicle 1000, thus replacing or partially replacing fuel or natural gas to provide driving power for vehicle 1000.

Referring to Fig. 2, which is a schematic structural diagram of battery 100 according to some embodiments of the present application. Battery 100 includes box body 10 and battery cell 20, and box body 10 is configured to accommodate battery cell 20.

Box body 10 is a component for accommodating battery cell 20, box body 10 provides an accommodating cavity for battery cell 20, and box body 10 may adopt various structures. In some embodiments, box body 10 may include first part 11 and second part 12, and first part 11 and second part 12 cover each other to define an accommodating cavity for accommodating battery cell 20. First part 11 and second part 12 may have various shapes, such as a rectangular parallelepiped and a cylinder. First part 11 may be a hollow structure with one side open, and second part 12 may also be a hollow structure with one side open. The open side of second part 12 covers the open side of first part 11 to form box body 10 having an accommodating cavity. It may also be possible that first part 11 is a hollow structure with one side open, second part 12 is a plate-like structure, and second part 12 covers the open side of first part 11 to form box body 10 with an accommodating cavity. First part 11 and second part 12 may be sealed by a sealing element, and the sealing element may be a sealing ring, a sealant, or the like.

In battery 100, one or more battery cells 20 may be provided. If there are a plurality of battery cells 20, the plurality of battery cells 20 may be connected in series or parallel or in a mixed connection, wherein the mixed connection means that the plurality of battery cells 20 are connected in both series and parallel. A plurality of battery cells 20 may be connected in series, in parallel, or in a mixed connection to form a battery module first, and then a plurality of battery modules may be connected in series or in parallel or mixed to form a whole, which is accommodated in box body 10. It is also possible that all battery cells 20 are directly connected in series, in parallel, or in a mixed connection to form a whole, and then the whole formed by all battery cells 20 is accommodated in box body 10.

In some embodiments, battery 100 may further include a bus component, and the plurality of battery cells 20 may be electrically connected through the bus component, so as to realize the series or parallel or mixed connection of the plurality of battery cells 20. The bus component may be a metal conductor, such as copper, iron, aluminum, stainless steel, and aluminum alloy.

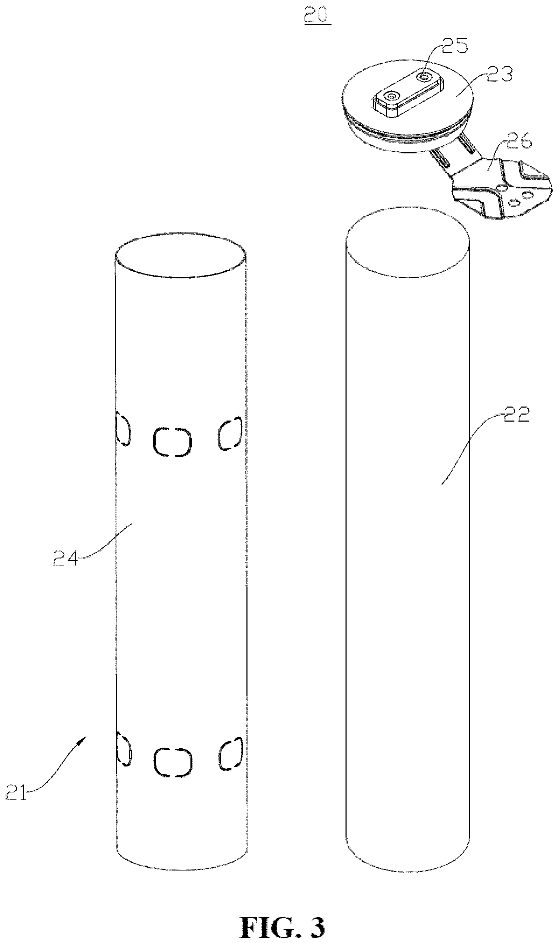

Referring to Fig. 3, which is an exploded diagram of battery cell 20 according to some embodiments of the present application. Battery cell 20 includes case 21, electrode assembly 22, end cap 23, and pressure relief apparatus 24.

Case 21 is a component for accommodating electrode assembly 22. Case 21 may be a hollow structure with an opening formed at one end, and case 21 may also be a hollow structure with openings formed at two opposite ends. If case 21 is a hollow structure with an opening formed at one end, one end cap 23 may be provided correspondingly; if case 21 is a hollow structure with openings formed at both ends, two end caps 23 may be provided, and two end caps 23 respectively cover the openings at both ends of case 21. Case 21 may be made of various materials, such as copper, iron, aluminum, steel, and aluminum alloy. Case 21 can be in various shapes, such as a cylinder and a rectangular parallelepiped. In FIG. 3, case 21 is a cylinder, and case 21 is a hollow structure with an opening formed at one end.

Electrode assembly 22 is a component in battery cell 20 where an electrochemical reaction occurs. Electrode assembly 22 may be a cylinder, a rectangular parallelepiped, or the like. If electrode assembly 22 is a cylinder, case 21 may also be a cylinder. If electrode assembly 22 is a rectangular parallelepiped, case 21 may also be a rectangular parallelepiped.

Electrode assembly 22 may include a positive electrode sheet, a negative electrode sheet, and a separator. Electrode assembly 22 may be a wound structure formed by winding a positive electrode sheet, a separator, and a negative electrode sheet, or a laminated structure formed by stacking a positive electrode sheet, a separator, and a negative electrode sheet. The positive electrode sheet may include a positive current collector and a positive active material layer coated on two opposite sides of the positive current collector. The negative electrode sheet may include a negative current collector and a negative active material layer coated on two opposite sides of the negative current collector. Electrode assembly 22 has a positive tab and a negative tab, the positive tab may be a part on the positive electrode sheet that is not coated with the positive active material layer, and the negative tab may be a part on the negative electrode sheet that is not coated with the negative active material layer.

End cap 23 is a component that covers the opening of case 21 to isolate the internal environment of battery cell 20 from the external environment. end cap 23 covers the opening of case 21, and end cap 23 and case 21 together define a space for accommodating electrode assembly 22, an electrolyte solution, and other components. The shape of end cap 23 may be adapted to the shape of case 21. For example, case 21 is a rectangular parallelepiped structure, and end cap 23 is a rectangular plate-shaped structure that matches case 21. For another example, case 21 is a cylindrical structure, and end cap 23 is a circular plate-shaped structure that matches case 21. The material of end cap 23 may also be various, for example, copper, iron, aluminum, steel, aluminum alloy, and the like. The material of end cap 23 and the material of case 21 may be the same or different.

Electrode terminal 25 may be arranged on end cap 23, and electrode terminal 25 is used for being electrically connected to the positive tab or negative tab of electrode assembly 22.

In some embodiments, battery cell 20 may further include current collecting member 26, and electrode terminal 25 is electrically connected to a positive tab or a negative tab of electrode assembly 22 through current collecting member 26.

There may be one or two current collecting members 26 of battery cell 20. For example, case 21 is a hollow structure with an opening formed at one end, and end cap 23 covers the opening of case 21. One of the positive tab and the negative tab is electrically connected to electrode terminal 25 through one current collecting member 26, and the other is electrically connected to case 21. For another example, case 21 is a hollow structure with openings formed at opposite ends, and two end caps 23 respectively cover the two openings of case 21. One of the positive tab and the negative tab is electrically connected to electrode terminal 25 on one end cap 23 through one current collecting member 26, and the other is electrically connected to electrode terminal 25 on the other end cap 23 through the other current collecting member 26.

Pressure relief apparatus 24 is a component for relieving the pressure inside battery cell 20. When the pressure or temperature inside battery cell 20 reaches a threshold, the pressure inside battery cell 20 is relieved through pressure relief apparatus 24. The specific structure of pressure relief apparatus 24 will be described in detail below with reference to the accompanying drawings.

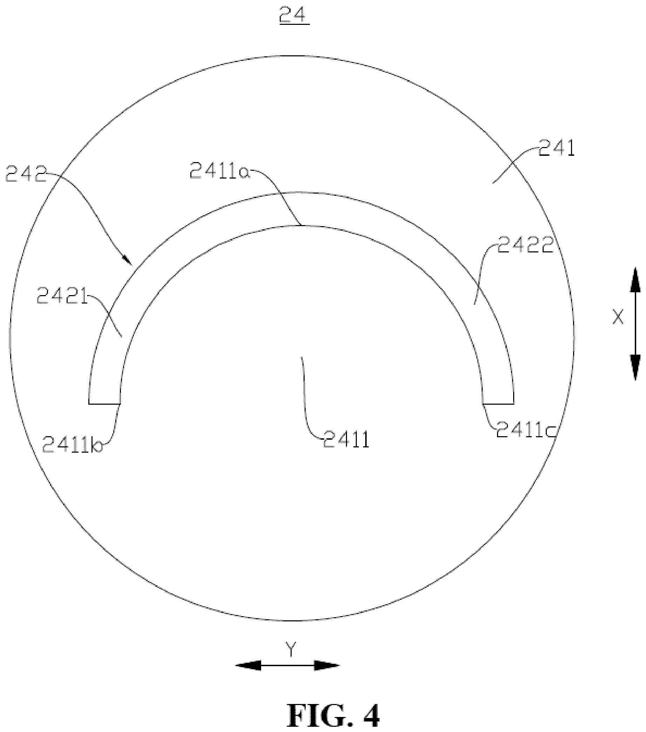

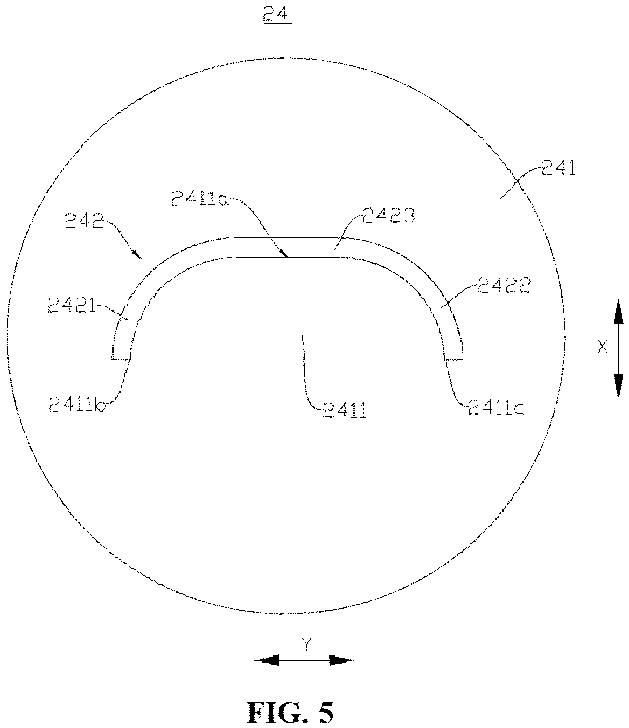

Referring to Fig. 4 and Fig. 5, Fig. 4 is a partial diagram of pressure relief apparatus 24 according to some embodiments of the present application, and Fig. 5 is a partial diagram of pressure relief apparatus 24 according to some other embodiments of the present application. Pressure relief apparatus 24 is used for battery cell 20, and pressure relief apparatus 24 includes pressure relief body 241 and scored groove 242. Pressure relief body 241 includes pressure relief portion 2411, and pressure relief portion 2411 is configured to be opened to relieve the pressure inside battery cell 20 when the internal pressure or temperature of battery cell 20 reaches a threshold. Pressure relief portion 2411 is provided with first opening side 2411a on one side in first direction X, and pressure relief portion 2411 is provided with second opening side 2411b and third opening side 2411c respectively on both sides in second direction Y, and first direction X is perpendicular to second direction Y. Scored groove 242 is arranged on pressure relief body 241, scored groove 242 defines pressure relief portion 2411, scored groove 242 includes first arc-shaped groove 2421 and second arc-shaped groove 2422, first arc-shaped groove 2421 extends from first opening side 2411a to second opening side 2411b, and second arc-shaped groove 2422 extends from first opening side 2411a to third opening side 2411c.

Pressure relief apparatus 24 may be a component installed on end cap 23, or may be a component installed on case 21, such as an explosion-proof valve and a rupture disc. Pressure relief apparatus 24 may also form case 21 of battery cell 20, and pressure relief apparatus 24 is case 21 for accommodating electrode assembly 22. In this case, scored groove 242 is arranged on case 21. Of course, scored groove 242 may be arranged on an outer surface of case 21 or on an inner surface of case 21.

First direction X and second direction Y are perpendicular to each other. In the embodiment in which pressure relief apparatus 24 is a sheet-like structure, for example, pressure relief apparatus 24 is a rupture disc, one of first direction X and second direction Y may be a length direction of pressure relief apparatus 24, and the other may be a width direction of pressure relief apparatus 24. In the embodiment in which pressure relief apparatus 24 is case 21, one of first direction X and second direction Y may be a circumferential direction of case 21, and the other may be an axial direction of case 21.

Pressure relief portion 2411 is a region of pressure relief body 241 defined by scored groove 242, and scored groove 242 is located at an edge of pressure relief portion 2411. During pressure relief, pressure relief portion 2411 will be opened with scored groove 242 as a boundary. In a process that pressure relief body 241 is ruptured at a position of scored groove 242, pressure relief portion 2411 may be opened by turning over to achieve pressure relief. Pressure relief portion 2411 is provided with first opening side 2411a on one side in first direction X, and is provided with second opening side 2411b and third opening side 2411c respectively on both sides in second direction Y, that is, pressure relief portion 2411 has three opening sides in different orientations.

Scored groove 242 may be formed on pressure relief body 241 in various manners, such as punching and milling. Scored groove 242 may be in various shapes, such as a "U" shape and a "C" shape. First arc-shaped groove 2421 and second arc-shaped groove 2422 may be circular arc structures, and first arc-shaped groove 2421 and second arc-shaped groove 2422 may have equal or unequal radii. First arc-shaped groove 2421 and second arc-shaped groove 2422 may be directly connected or indirectly connected.

In pressure relief apparatus 24, scored groove 242 on pressure relief body 241 defines pressure relief portion 2411, and when the internal pressure or temperature of battery cell 20 reaches a threshold, pressure relief portion 2411 will be opened with scored groove 242 as a boundary. First arc-shaped groove 2421 of scored groove 242 extends from first opening side 2411a to second opening side 2411b, and second arc-shaped groove 2422 extends from first opening side 2411a to third opening side 2411c; therefore, because of the arc-shaped design of first arc-shaped groove 2421 and second arc-shaped groove 2422, in a process of opening pressure relief portion 2411, pressure relief portion 2411 can be ruptured smoothly from first opening side 2411a to second opening side 2411b and the third opening side 2411c respectively along first arc-shaped groove 2421 and second arc-shaped groove 2422. Pressure relief portion 2411 has a large pressure relief area, making it less likely that pressure relief portion 2411 cannot be opened in a large area, thereby improving the safety of battery cell 20.

In addition, the arc-shaped design of first arc-shaped groove 2421 and second arc-shaped groove 2422 shortens a path that pressure relief portion 2411 is ruptured along scored groove 242, and then pressure relief portion 2411 is quickly opened to realize rapid pressure relief, which improves the pressure relief efficiency, reduces the risk of fire and explosion of battery cell 20 due to thermal runaway, and improves the safety of battery cell 20.

In some embodiments, still referring to Fig. 5, scored groove 242 may further include first groove 2423, first groove 2423 extends in second direction Y, and first arc-shaped groove 2421 is connected to second arc-shaped groove 2422 through first groove 2423.

First groove 2423 extends in second direction Y, and second opening side 2411b and third opening side 2411c of pressure relief portion 2411 are oppositely arranged in the extension direction of first groove 2423. First groove 2423 functions to connect first arc-shaped groove 2421 and second arc-shaped groove 2422, and first groove 2423 is located on first opening side 2411a of pressure relief portion 2411. The groove width of first groove 2423 may be the same as the groove widths of first arc-shaped groove 2421 and second arc-shaped groove 2422, and the depth of first groove 2423 may be equal to the depth of first arc-shaped groove 2421 and the depth of second arc-shaped groove 2422, or greater than the depth of first arc-shaped groove 2421 and the depth of second arc-shaped groove 2422. In an actual processing process, first arc-shaped groove 2421, first groove 2423, and second arc-shaped groove 2422 may be formed integrally.

The position where first groove 2423 is located is the position where pressure relief body 241 is ruptured first. In other words, when the internal pressure or temperature of battery cell 20 reaches the threshold, pressure relief body 241 is ruptured first at the position of first groove 2423, and then ruptured along first arc-shaped groove 2421 and second arc-shaped groove 2422.

In this embodiment, since first arc-shaped groove 2421 and second arc-shaped groove 2422 are connected through first groove 2423, the arrangement of first groove 2423 increases a distance between first arc-shaped groove 2421 and second arc-shaped groove 2422, increases the size of pressure relief portion 2411 in second direction Y, increases the opening area of pressure relief portion 2411, and increases the pressure relief area of pressure relief apparatus 24, thereby improving the pressure relief efficiency of pressure relief apparatus 24.

Still referring to Fig. 5, in some embodiments, first arc-shaped groove 2421 and second arc-shaped groove 2422 are both tangential to first groove 2423.

First arc-shaped groove 2421 and second arc-shaped groove 2422 are both tangent to first groove 2423, which eliminates a sharp corner at a connection position of first arc-shaped groove 2421 and first groove 2423 and a sharp corner at a connection position of second arc-shaped groove 2422 and first groove 2423, thereby avoiding stress concentration, and improving the stability of pressure relief apparatus 24 before pressure relief.

In some embodiments, still referring to Fig. 4, an end of first arc-shaped groove 2421 away from second opening side 2411b is connected to an end of second arc-shaped groove 2422 away from third opening side 2411c.

First arc-shaped groove 2421 and second arc-shaped groove 2422 may have equal or unequal radii. In a case that the radii of first arc-shaped groove 2421 and second arc-shaped groove 2422 are equal, first arc-shaped groove 2421 and second arc-shaped groove 2422 may be located on the same circumference, that is, first arc-shaped groove 2421 and second arc-shaped groove 2422 are arranged concentrically.

In this embodiment, the end of first arc-shaped groove 2421 away from second opening side 2411b is connected to the end of second arc-shaped groove 2422 away from the third opening site 2411c, that is, first arc-shaped groove 2421 and second arc-shaped groove 2422 are directly connected, which simplifies the structure of the scored groove 242 and reduces the production cost.

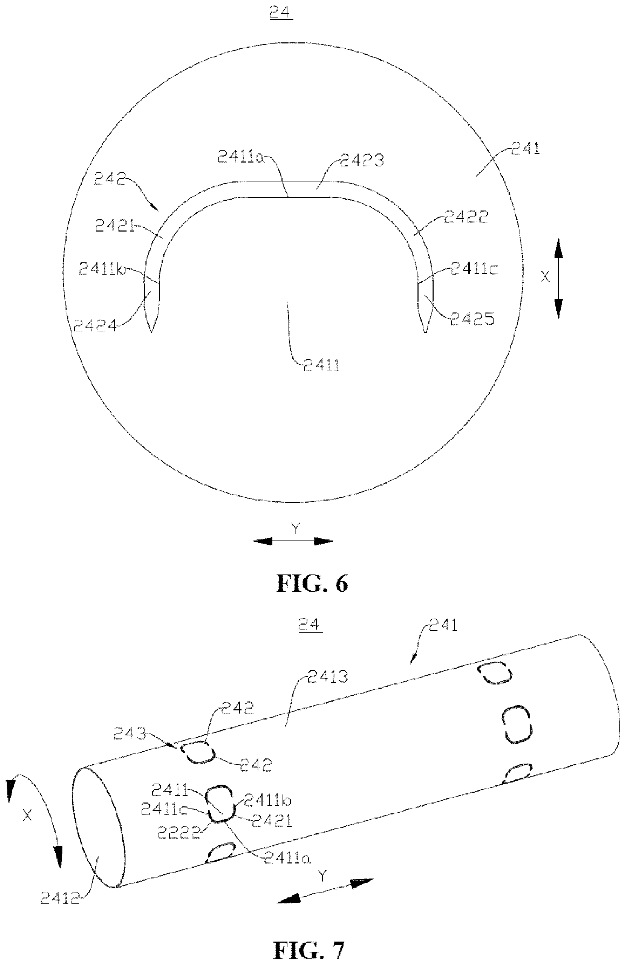

In some embodiments, referring to Fig. 6, which is a partial diagram of pressure relief apparatus 24 according to some embodiments of the present application. Scored groove 242 may further include second groove 2424 and third groove 2425, second groove 2424 extends from one end of first arc-shaped groove 2421 away from second arc-shaped groove 2422 to a direction away from first opening side 2411a, and third groove 2425 extends from one end of second arc-shaped groove 2422 away from first arc-shaped groove 2421 to a direction away from first opening side 2411a.

Second groove 2424 and third groove 2425 are located on second opening side 2411b and third opening side 2411c of pressure relief portion 2411, respectively. First groove 2423 and second groove 2424 may be arranged in parallel. First groove 2423 and second groove 2424 may also be arranged to form a non-zero angle, for example, a distance between first groove 2423 and second groove 2424 is gradually increased from a position close to first opening side 2411a to a distance away from first opening side 2411a. The length of second groove 2424 and the length of third groove 2425 may be equal or unequal.

It should be noted that, no matter first arc-shaped groove 2421 is directly connected to second arc-shaped groove 2422, or is indirectly connected (for example, first arc-shaped groove 2421 and second arc-shaped groove 2422 are connected through first groove 2423), scored groove 242 may include second groove 2424 and third groove 2425.

In this embodiment, the arrangement of second groove 2424 and third groove 2425 increases the size of pressure relief portion 2411 in first direction X, increases the opening area of pressure relief portion 2411, and increases the pressure relief area of pressure relief apparatus 24, thereby improving the pressure relief efficiency of pressure relief apparatus 24.

In some embodiments, second groove 2424 is tangential to first arc-shaped groove 2421, and third groove 2425 is tangential to second arc-shaped groove 2422.

Second groove 2424 is tangential to first arc-shaped groove 2421 to eliminate a sharp corner at a connection position of second groove 2424 and first arc-shaped groove 2421, and third groove 2425 is tangential to second arc-shaped groove 2422 to eliminate a sharp corner at a connection position of third groove 2425 and second arc-shaped groove 2422, thereby avoiding stress concentration, and improving the stability of pressure relief apparatus 24 before pressure relief.

Still referring to Fig. 6, in the embodiment in which both first arc-shaped groove 2421 and second arc-shaped groove 2422 are tangential to first groove 2423, second groove 2424 is tangential to first arc-shaped groove 2421, and third groove 2425 is tangential to second arc-shaped groove 2422, so that first groove 2423 smoothly transitions to second groove 2424 through first arc-shaped groove 2421, and first groove 2423 smoothly transitions to third groove 2425 through second arc-shaped groove 2422. In the process of opening pressure relief portion 2411, pressure relief portion 2411 can be ruptured more smoothly from first groove 2423 to second groove 2424 and third groove 2425 respectively along first arc-shaped groove 2421 and second arc-shaped groove 2422.

In some embodiments, both second groove 2424 and third groove 2425 extend in first direction X. In other words, second groove 2424 and third groove 2425 are arranged in parallel, so that pressure relief portion 2411 can be opened more regularly during the pressure relief, which is beneficial to the pressure relief of pressure relief apparatus 24.

For example, the length of second groove 2424 is equal to the length of third groove 2425, so that a ruptured length of pressure relief portion 2411 on second opening side 2411b is the same as a ruptured length of pressure relief portion 2411 on third opening side 2411c, so that pressure relief portion 2411 can be opened more regularly during pressure relief.

In some embodiments, referring to Fig. 4 to Fig. 6, in second direction Y, first arc-shaped groove 2421 and second arc-shaped groove 2422 are symmetrically distributed on pressure relief body 241.

First arc-shaped groove 2421 and second arc-shaped groove 2422 are symmetrically distributed in second direction Y, that is, symmetry axes of first arc-shaped groove 2421 and second arc-shaped groove 2422 extend in first direction X.

First arc-shaped groove 2421 and second arc-shaped groove 2422 are symmetrically distributed on pressure relief body 241, which is conducive to rupturing of pressure relief portion 2411 from first opening side 2411a to second opening side 2411b and third opening side 2411c simultaneously along first arc-shaped groove 2421 and the second arc-shaped groove 2422, thereby improving the opening efficiency of pressure relief portion 2411.

In some embodiments, referring to Fig. 7, which is a schematic structural diagram of pressure relief apparatus 24 according to some embodiments of the present application, and pressure relief body 241 includes accommodating space 2412 and a wall. Accommodating space 2412 is configured to accommodate electrode assembly 22 of battery cell 20, the wall defines accommodating space 2412, and scored groove 242 is arranged on an inner surface or an outer surface of the wall.

The wall of pressure relief body 241 defines accommodating space 2412 for accommodating electrode assembly 22, and pressure relief apparatus 24 forms case 21 of battery cell 20. The wall of pressure relief body 241 may have various shapes, such as a cylinder and a rectangular parallelepiped. The wall may have one opening or two openings. If the wall has only one opening, there is one end cap 23 of battery cell 20; and if the wall has two opposite openings, there may be two end caps 23 of battery cell 20 arranged correspondingly.

In the present embodiment, pressure relief body 241 includes accommodating space 2412 defined by the wall, and accommodating space 2412 can accommodate electrode assembly 22, so that pressure relief apparatus 24 not only has a pressure relief function, but also has an accommodating function for accommodating electrode assembly 22.

In some embodiments, the wall of pressure relief body 241 includes peripheral wall 2413, and peripheral wall 2413 is a hollow structure with both ends open in an extension direction thereof; and scored groove 242 is arranged on an inner surface or an outer surface of peripheral wall 2413.

In the wall of pressure relief body 241, there may be only peripheral wall 2413, and a bottom wall may further be included in addition to peripheral wall 2413. If the wall of pressure relief body 241 has only peripheral wall 2413, pressure relief body 241 is a hollow structure with openings at both ends, and case 21 is a hollow structure with openings at both ends. If the wall of pressure relief body 241 further includes a bottom wall, the bottom wall may block the opening at one end of peripheral wall 2413, so that pressure relief body 241 is a hollow structure with an opening at one end, and case 21 is a hollow structure with an opening at one end. Peripheral wall 2413 may be a punched and drawn member.

For general battery cell 20, scored groove 242 is arranged on the bottom wall of case 21, or is arranged on end cap 23, and the size of scored groove 242 is limited by the bottom wall or end cap 23, the space provided by the bottom wall or end cap 23 for scored groove 242 is limited, and the pressure relief effect is poor.

In this embodiment, scored groove 242 is arranged on peripheral wall 2413, peripheral wall 2413 may provide a larger arrangement space for scored groove 242, which is conducive to forming large-sized pressure relief portion 2411 on peripheral wall 2413, thereby ensuring the pressure relief area of pressure relief portion 2411.

In some embodiments, still referring to Fig. 7, peripheral wall 2413 is a cylinder, and an included angle between the extension direction of peripheral wall 2413 and second direction Y is less than 45 degrees.

Peripheral wall 2413 is a cylinder, and therefore, the extension direction of peripheral wall 2413 is the peripheral direction of peripheral wall 2413. In the embodiment in which scored groove 242 includes first groove 2423, first groove 2423 extends in second direction Y, and the included angle between the extension direction of peripheral wall 2413 and second direction Y is less than 45 degrees, so that it is understandable that, the included angle between the extension direction of peripheral wall 2413 and first groove 2423 is less than 45 degrees.

Peripheral wall 2413 is a cylinder, and the part of scored groove 242 that forms a larger included angle with the extension direction of peripheral wall 2413 is less likely to rupture. The included angle between the extension direction of peripheral wall 2413 and second direction Y is less than 45 degrees, so that the difficulty of rupturing of the first arc-shaped groove from first opening side 2411a to second opening side 2411b is gradually increased, and the difficulty of rupturing of the second arc-shaped groove from second opening side 2411b to third opening side 2411c is gradually increased, ensuring that pressure relief portion 2411 is opened first from first opening side 2411a.

In some embodiments, the extension direction of peripheral wall 2413 is consistent with second direction Y, which further ensures that pressure relief portion 2411 is opened first from first opening side 2411a.

The extension direction of peripheral wall 2413 is consistent with second direction Y. It is understandable that the included angle between the extension direction of peripheral wall 2413 and second direction Y is 0 degrees, and first direction X is the circumferential direction of peripheral wall 2413.

In the embodiment in which first arc-shaped groove 2421 is directly connected to second arc-shaped groove 2422, the connection position of first arc-shaped groove 2421 and second arc-shaped groove 2422 is located on first opening side 2411a, and since peripheral wall 2413 is a cylinder, pressure relief body 241 is most likely to be ruptured at a position adjacent to first arc-shaped groove 2421 and second arc-shaped groove 2422. In the embodiment in which first arc-shaped groove 2421 and second arc-shaped groove 2422 are indirectly connected through first groove 2423, the extension direction of first groove 2423 is consistent with the extension direction of peripheral wall 2413. Peripheral wall 2413 is a cylinder, the part having a smaller included angle between scored groove 242 and the extension direction of peripheral wall 2413 is more likely to be ruptured, and therefore, pressure relief body 241 is most likely to be ruptured at the position of first groove 2423. In addition, since peripheral wall 2413 is a cylinder, pressure relief portion 2411 defined by scored groove 242 is in a curved state due to the bending of peripheral wall 2413, and pressure relief portion 2411 has a tendency of recovering the deformation, which is more beneficial for pressure relief portion 2411 to be opened in scored groove 242 during rupturing.

In some embodiments, still referring to Fig. 7, the wall of pressure relief body 241 is provided with scored group 243, and scored group 243 includes two scored grooves 242 arranged at an interval in first direction X. First opening side 2411a of pressure relief portion 2411 defined by one of scored grooves 242 in scored group 243 and first opening side 2411a of pressure relief portion 2411 defined by the other scored groove 242 are arranged back to back.

In the present embodiment, first opening side 2411a of pressure relief portion 2411 defined by one of scored grooves 242 in scored group 243 and first opening side 2411a of pressure relief portion 2411 defined by the other scored groove 242 are arranged back to back, so that two pressure relief portions 2411 defined by two scored grooves 242 are arranged back to back. In the pressure relief process, two pressure relief portions 2411 will be opened back to back to increase the pressure relief area.

In some embodiments, still referring to Fig. 7, the wall of pressure relief body 241 includes peripheral wall 2413, peripheral wall 2413 is a hollow structure with both ends open in its extension direction, and a plurality of scored groups 243 are arranged at intervals on peripheral wall 2413 in a circumferential direction thereof.

In the extension direction of peripheral wall 2413, there may be one row or a plurality of rows of scored groups 243 on peripheral wall 2413, and each row of scored groups 243 includes a plurality of scored groups 243 arranged in the circumferential direction of peripheral wall 2413. Scored grooves 242 in scored group 243 may be arranged on the outer surface of peripheral wall 2413, or may be arranged on the inner surface of peripheral wall 2413. For example, in Fig. 7, in the extension direction of peripheral wall 2413, two rows of scored groups are arranged on the outer surface of peripheral wall.

In the present embodiment, peripheral wall 2413 is provided with a plurality of scored groups 243 arranged at intervals in the peripheral direction thereof, the position corresponding to each scored group 243 may be used for pressure relief, so that pressure relief apparatus 24 can achieve pressure relief in multiple orientations to improve the pressure relief efficiency. Even if scored group 243 in one of the orientations is blocked by another component, pressure relief portion 2411 defined by scored group 243 in another orientation of pressure relief apparatus 24 can be opened for pressure relief.

It should be noted that, in the embodiment where the wall of pressure relief body 241 further includes a bottom wall connected to peripheral wall 2413, scored group 243 may also be arranged on the bottom wall.

Battery cell 20 is provided in an embodiment of the present application, and includes pressure relief apparatus 24 according to any one of the above embodiments.

Battery 100 is provided in an embodiment of the present application, and includes box body 10 and battery cell 20 according to any one of the above embodiments, and box body 10 is configured to accommodate battery cell 20.

An electrical device is provided in an embodiment of the present application, and includes battery 100 according to any one of the above embodiments.

The electrical device may be any of the aforementioned devices that use battery 100.

Referring to Fig. 7, a cylindrical case for accommodating electrode assembly 22 is provided in an embodiment of the present application, and the cylindrical case is provided with scored groove 242. Scored groove 242 defines pressure relief portion 2411, pressure relief portion 2411 is provided with first opening side 2411a on one side in first direction X, pressure relief portion 2411 is provided with second opening side 2411b and third opening side 2411c respectively on both sides in second direction Y, and first direction X is perpendicular to second direction Y. Scored groove 242 includes first arc-shaped groove 2421 and second arc-shaped groove 2422, first arc-shaped groove 2421 extends from first opening side 2411a to second opening side 2411b, and second arc-shaped groove 2422 extends from first opening side 2411a to third opening side 2411c. Because of the arc-shaped design of first arc-shaped groove 2421 and second arc-shaped groove 2422, in a process of opening pressure relief portion 2411, pressure relief portion 2411 can be smoothly ruptured from first opening side 2411a to second opening side 2411b and third opening side 2411c along first arc-shaped groove 2421 and second arc-shaped groove 2422, respectively. Pressure relief portion 2411 has a large pressure relief area, making it less likely that pressure relief portion 2411 cannot be opened in a large area, thereby improving the safety of battery cell 20.

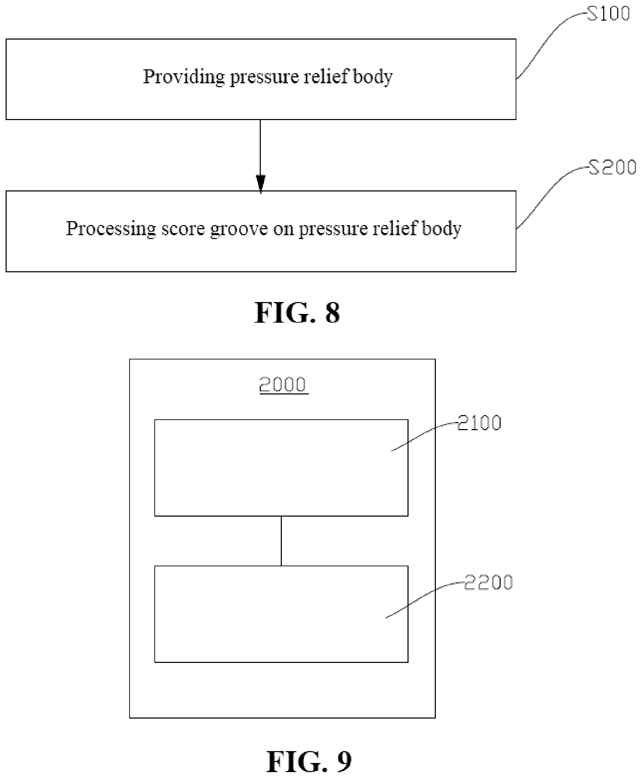

A manufacture method for pressure relief apparatus 24 is provided in an embodiment of the present application. Referring to Fig. 8, which is a flow chart of a manufacture method for pressure relief apparatus 24 according to some embodiments of the present application, and the method includes the following steps:
S100: Providing pressure relief body 241; and
S200: Processing scored groove 242 on pressure relief body 241.

Scored groove 242 defines pressure relief portion 2411, and pressure relief portion 2411 is configured to be opened to relieve a pressure inside battery cell 20 when an internal pressure or temperature of battery cell 20 reaches a threshold, pressure relief portion 2411 is provided with first opening side 2411a on one side in first direction X, and is provided with second opening side 2411b and third opening side 2411c respectively on both sides in second direction Y, and first direction X is perpendicular to second direction Y. Scored groove 242 includes first arc-shaped groove 2421 and second arc-shaped groove 2422, first arc-shaped groove 2421 extends from first opening side 2411a to second opening side 2411b, and second arc-shaped groove 2422 extends from first opening side 2411a to third opening side 2411c.

It should be noted that, for the relevant structures of pressure relief apparatus 24 manufactured by the manufacturing methods according to the above embodiments, reference may be made to pressure relief apparatus 24 according to the foregoing embodiments, and details are not repeated here.

Manufacturing apparatus 2000 for pressure relief apparatus 24 is further provided in an embodiment of the present application. Referring to Fig. 9, which is a schematic block diagram of manufacturing apparatus 2000 for pressure relief apparatus 24 according to some embodiments of the present application. Manufacturing apparatus 2000 includes providing means 2100 and processing means 2200. Providing means 2100 is configured to provide pressure relief body 241, and processing means 2200 is configured to process scored groove 242 on pressure relief body 241.

Scored groove 242 defines pressure relief portion 2411, and pressure relief portion 2411 is configured to be opened to relieve a pressure inside battery cell 20 when an internal pressure or temperature of battery cell 20 reaches a threshold, pressure relief portion 2411 is provided with first opening side 2411a on one side in first direction X, and is provided with second opening side 2411b and third opening side 2411c respectively on both sides in second direction Y, and first direction X is perpendicular to second direction Y. Scored groove 242 includes first arc-shaped groove 2421 and second arc-shaped groove 2422, first arc-shaped groove 2421 extends from first opening side 2411a to second opening side 2411b, and second arc-shaped groove 2422 extends from first opening side 2411a to third opening side 2411c.

It should be noted that, for the relevant structure of pressure relief apparatus 24 manufactured by manufacturing apparatus 2000 according to the above embodiment, reference can be made to pressure relief apparatus 24 according to the foregoing embodiments, which will not be repeated here.

It should be noted that in case of no conflicts, the embodiments and the features of the embodiments in the present application can be combined with each other.

The above embodiments are only used for illustrating the technical solution of the present application, and are not intended to limit the present application. For those skilled in the art, the present application may have various modifications and changes. Any modifications, equivalent replacements, improvements, and the like made within the spirit and principle of the present application shall be included within the protection scope of the present application.

## Claims

1. A pressure relief apparatus, used for a battery cell, comprising:
a pressure relief body comprising a pressure relief portion, wherein the pressure relief portion is configured to be opened to relieve a pressure inside the battery cell when an internal pressure or temperature of the battery cell reaches a threshold, the pressure relief portion is provided with a first opening side on one side in a first direction, the pressure relief portion is provided with a second opening side and a third opening side respectively on both sides in a second direction, and the first direction is perpendicular to the second direction; and
a scored groove, arranged on the pressure relief body, wherein the scored groove defines the pressure relief portion, the scored groove comprises a first arc-shaped groove and a second arc-shaped groove, the first arc-shaped groove extends from the first opening side to the second opening side, and the second arc-shaped groove extends from the first opening side to the third opening side.

2. The pressure relief apparatus according to claim 1, wherein the scored groove further comprises a first groove, the first groove extends in the second direction, and the first arc-shaped groove is connected to the second arc-shaped groove through the first groove.

3. The pressure relief apparatus according to claim 2, wherein both the first arc-shaped groove and the second arc-shaped groove are tangent to the first groove.

4. The pressure relief apparatus according to claim 1, wherein an end of the first arc-shaped groove away from the second opening side is connected to an end of the second arc-shaped groove away from the third opening side.

5. The pressure relief apparatus according to any one of claims 1 to 4, wherein the scored groove further comprises a second groove and a third groove; and
the second groove extends from one end of the first arc-shaped groove away from the second arc-shaped groove to a direction away from the first opening side, and the third groove extends from one end of the second arc-shaped groove away from the first arc-shaped groove to a direction away from the first opening side.

6. The pressure relief apparatus according to claim 5, wherein the second groove is tangential to the first arc-shaped groove and the third groove is tangential to the second arc-shaped groove.

7. The pressure relief apparatus according to claim 5 or 6, wherein both the second groove and the third groove extend in the first direction.

8. The pressure relief apparatus according to any one of claims 1 to 7, wherein in the second direction, the first arc-shaped groove and the second arc-shaped groove are symmetrically distributed on the pressure relief body.

9. The pressure relief apparatus according to any one of claims 1 to 8, wherein the pressure relief body comprises:
an accommodating space for accommodating an electrode assembly of the battery cell, and
a wall that defines the accommodating space, wherein the scored groove is arranged on an inner surface or an outer surface of the wall.

10. The pressure relief apparatus according to claim 9, wherein the wall comprises a peripheral wall, and the peripheral wall is a hollow structure with both ends open in an extension direction thereof; and
the scored groove is arranged on an inner surface or an outer surface of the peripheral wall.

11. The pressure relief apparatus according to claim 10, wherein the peripheral wall is a cylinder, and an included angle between the extension direction of the peripheral wall and the second direction is less than 45 degrees.

12. The pressure relief apparatus according to claim 10 or 11, wherein the extension direction of the peripheral wall is consistent with the second direction.

13. The pressure relief apparatus according to claim 9, wherein the wall is provided with a scored group, and the scored group comprises two scored grooves arranged at an interval in the first direction, the first opening side of the pressure relief portion defined by one of the scored grooves in the scored group and the first opening side of the pressure relief portion defined by the other scored groove are arranged back to back.

14. The pressure relief apparatus according to claim 13, wherein the wall comprises a peripheral wall, the peripheral wall is a hollow structure with both ends open in the extension direction thereof, and a plurality of the scored groups are arranged on the peripheral wall at intervals in a circumferential direction thereof.

15. A battery cell, comprising the pressure relief apparatus according to any one of claims 1 to 14.

16. A battery, comprising:
the battery cell according to claim 15; and
a box body configured to accommodate the battery cell.

17. An electrical device, comprising the battery according to claim 16.

18. A manufacturing method for a pressure relief apparatus, the method comprising:
providing a pressure relief body; and
processing a scored groove on the pressure relief body;
wherein the scored groove defines a pressure relief portion, the pressure relief portion is configured to be opened to relieve a pressure inside the battery cell when an internal pressure or temperature of the battery cell reaches a threshold, the pressure relief portion is provided with a first opening side on one side in a first direction, and is provided with a second opening side and a third opening side respectively on both sides in a second direction, the first direction is perpendicular to the second direction, the scored groove comprises a first arc-shaped groove and a second arc-shaped groove, the first arc-shaped groove extends from the first opening side to the second opening side, and the second arc-shaped groove extends from the first opening side to the third opening side.

19. A manufacturing apparatus for a pressure relief apparatus, the manufacturing apparatus comprising:
a providing means configured to provide a pressure relief body; and
a processing means configured to process a scored groove on the pressure relief body;
wherein the scored groove defines a pressure relief portion, the pressure relief portion is configured to be opened to relieve a pressure inside the battery cell when an internal pressure or temperature of the battery cell reaches a threshold, the pressure relief portion is provided with a first opening side on one side in a first direction, and is provided with a second opening side and a third opening side respectively on both sides in a second direction, the first direction is perpendicular to the second direction, the scored groove comprises a first arc-shaped groove and a second arc-shaped groove, the first arc-shaped groove extends from the first opening side to the second opening side, and the second arc-shaped groove extends from the first opening side to the third opening side.
